# DEMANDE DE BREVET EUROPEEN

(11) **EP 1 232 904 A1**
(43) Date de publication de la demande: **21.08.2002**
(21) Numéro de dépôt: 02290377.7
(22) Date de dépôt: 15.02.2002
(51) Int. Cl.: B60P 1/44, B60R 19/56

(54) **Véhicule de transport de marchandises à plateforme élévatrice**

(30) Priorité: 19.02.2001 FR 0102230
(71) Demandeur: Grosse, Gérard, 76270 Neufchatel-en-Bray (FR)
(72) Inventeur: Grosse, Gérard, 76270 Neufchatel-en-Bray (FR)
(74) Mandataire: Jacobson, Claude

(57) **Abrégé**

Véhicule de transport de marchandises comprenant une plateforme de transport (3) portée sur les longerons (7) du châssis du véhicule situés à l'arrière de la cabine du conducteur (1) de celui-ci et une plateforme élévatrice (11) mobile verticalement pour le chargement et le déchargement du véhicule, caractérisé en ce que ladite plateforme élévatrice (11) est disposée dans une échancrure (10) de la plateforme de transport (3) débouchant sur un bord de ladite plateformée et est montée déplaçable le long des montants verticaux (14) solidaires du châssis du véhicule, au moins entre une position affleurant la plateforme de transport (3) et une position au sol.

## Description

La présente invention concerne les véhicules de transport de marchandises et se rapporte plus particulièrement à de tels véhicules pourvus de plateformes élévatrices de chargement et de déchargement.

On connaît des camions comportant une caisse à parois latérales munies de portes coulissantes par exemple escamotables sous le pavillon ou toit de la caisse.

En outre, la plupart des camions sont pourvus d'une porte arrière en forme de rideau également relevable sous la partie arrière du toit.

De nombreux véhicules du type précité sont de plus équipés de plateformes élévatrices pour le chargement et le déchargement de marchandises.

Certaines de ces plateformes élévatrices sont des plateformes arrière rabattables en position verticale contre la porte arrière de la caisse du véhicule et déployables en position horizontale au-delà de l'arrière de la caisse.

D'autres plateformes élévatrices sont des plateformes latérales déployables en position horizontale sur un côté de la caisse et permettant en fonction de leur longueur, d'accéder à une portion correspondante de la longueur de ladite caisse.

Une plateforme latérale nécessite pour pouvoir être déployée en position horizontale d'utilisation, lorsqu'un véhicule de transport qui en est muni est, comme dans la plupart des cas, stationné en double file pour livrer sa marchandise, un espace le long de la caisse dont la largeur accroît considérablement l'encombrement en largeur du véhicule sur la chaussée et entrave ainsi la circulation.

L'invention vise à remédier à cet inconvénient en créant une plateforme élévatrice pour véhicule de transport de marchandises qui tout en étant d'une grande efficacité, ne nécessite pour son fonctionnement aucun encombrement extérieur à la plateforme de la caisse du véhicule.

Elle a donc pour objet un véhicule de transport de marchandises comprenant une plateforme de transport portée par les longerons du châssis du véhicule situés à l'arrière de la cabine du conducteur de celui-ci et une plateforme élévatrice mobile verticalement pour le chargement et le déchargement du véhicule, caractérisé en ce que ladite plateforme élévatrice est disposée dans une échancrure de la plateforme de transport débouchant sur un bord de ladite plateforme et est montée déplaçable le long de montants verticaux solidaires du châssis du véhicule, au moins entre une position affleurant la plateforme de transport et une position au sol.

Suivant d'autres caractéristiques de l'invention :
- la plateforme de transport supportant une caisse, les montants verticaux s'étendent à partir du dessous de la plateforme de transport jusqu'au toit de la caisse ;
- la plateforme élévatrice comporte un plateau pourvu de bras verticaux engagés dans les montants verticaux correspondant et déplaçables dans ceux-ci au moyen d'organes de mouvement sous l'action de vérins portés par lesdits montants verticaux ;
- les vérins d'actionnement de la plateforme élévatrice sont disposés dans les portions supérieures des montants verticaux ;
- ladite plateforme élévatrice est disposée dans une échancrure débouchant sur un bord de la plateforme de transport coopérant avec une porte de la caisse ;
- ladite porte est une porte coulissante et lesdits montants verticaux sont disposés dans la caisse à l'intérieur par rapport à la position de la porte coulissante correspondante lorsqu'elle est escamotée sous le toit de la caisse ;
- une partie de la barre anti-encastrement située en regard de la trajectoire de la plateforme élévatrice est montée escamotable dans le reste de la barre anti-encastrement sous l'action d'un vérin ;
- une partie de la barre anti-encastrement située en regard de la trajectoire de la plateforme élévatrice est montée déplaçable transversalement vers le châssis du véhicule sous l'action d'un vérin.

L'invention sera mieux comprise à la lecture de la description qui va suivre, donnée uniquement à titre d'exemple et faite en se référant aux dessins annexés, sur lesquels :
- la Fig.1 est une vue en perspective d'un camion muni d'une plateforme élévatrice suivant l'invention représentée en position inactive ;
- la Fig.2 est une vue de l'arrière avec arrachement partiel du camion suivant la figure 1 ;
- la Fig.3 est une vue en perspective analogue à celle de la figure 1 montrant la plateforme élévatrice représentée en position abaissée ; et
- la Fig.4 est une vue schématique en plan d'un camion montrant les possibilités d'implantation de la plateforme élévatrice suivant l'invention.

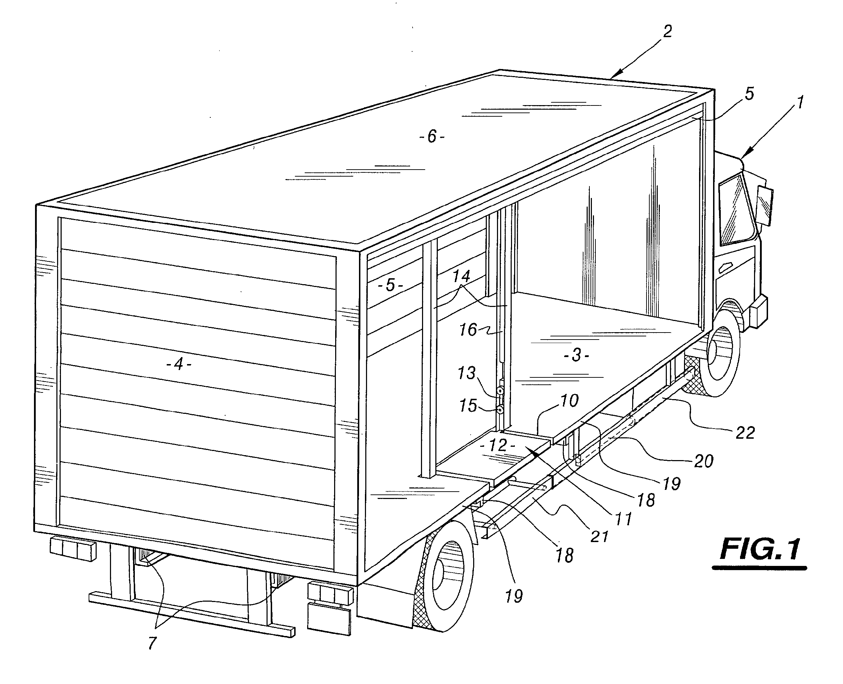

Sur la figure 1, on a représenté un véhicule de transport de marchandises comprenant une cabine 1 pour le conducteur et une caisse 2 de transport de marchandises portées par une plateforme de transport 3 et munie d'une porte sectionale arrière 4 et de portes coulissantes latérales 5, l'une d'entre elles étant représentée en position escamotée sous le toit 6 de la caisse.

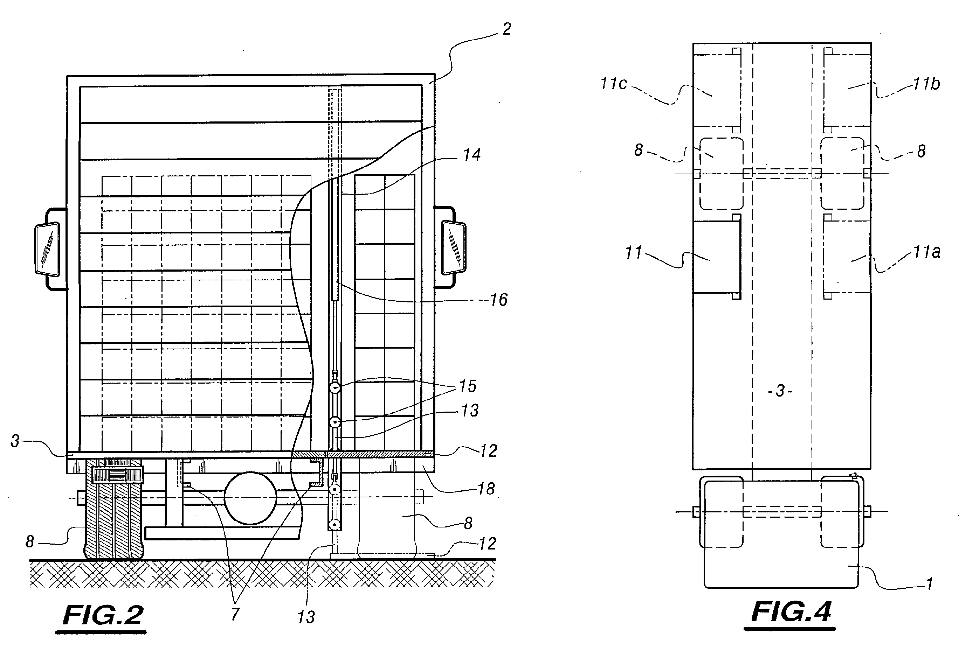

La plateforme de transport 3 est, comme représenté en particulier à la figure 2, portée par des longerons 7 disposés entre les roues arrière 8 du véhicule et formant la partie arrière du châssis de celui-ci.

En revenant à la figure 1, on voit que dans la plateforme de transport 3 du véhicule dont l'une des portes latérales 5 est en position escamotée sous le toit 6 de la caisse 2, est ménagée une échancrure 10 de forme rectangulaire dans laquelle est disposée une plateforme élévatrice 11 comprenant un plateau 12 pourvu de deux bras verticaux tels que le bras 13 montés déplaçables dans des montants 14 en forme de rails de guidage par l'intermédiaire d'organes de roulement 15 et actionnés par des vérins 16 disposés par exemple dans les parties supérieures des montants 14.

Chacun des montants 14 est fixé à sa partie inférieure à une traverse 18 du châssis qui s'étend sur toute la largeur de la plateforme et qui est reliée par exemple par soudage aux longerons 7 du châssis du véhicule. Les traverses 18 définissent entre elles l'échancrure 10 de réception de la plateforme élévatrice 11. Elles sont fixées par leurs extrémités extérieures à la rive 19 de la plateforme 3 interrompue par la présence de l'échancrure 10.

A leur partie supérieure, les montants 14 sont fixés à une ferrure longitudinale non représentée du toit 6 à l'intérieur par rapport à la position de la porte coulissante 5 correspondante lorsqu'elle est escamotée sous le toit de la caisse 2.

Afin de permettre le déplacement de la plateforme élévatrice 11 jusqu'au sol, les montants 14 s'étendent au-dessous de la plateforme de transport 3 sur une longueur appropriée. En outre, le véhicule comporte une barre anti-encastrement 20 dont une partie 21 située en regard de la trajectoire de la plateforme élévatrice 11, est escamotable de façon télescopique par exemple à l'intérieur du reste de la barre anti-encastrement 20 sous l'action d'un vérin 22 porté par ladite barre 20.

Dans l'exemple représenté au dessin, le vérin 22 est monté dans la barre anti-encastrement.

Selon une variante, la partie de la barre anti-encastrement située en regard de la trajectoire de la plateforme élévatrice peut être montée déplaçable transversalement vers le châssis du véhicule, sous l'action d'un vérin.

Les vérins 16 sont par exemple des vérins hydrauliques et le vérin 22 est par exemple un vérin pneumatique. Ces vérins peuvent être actionnés à l'aide d'un boîtier fixe ou portable.

La plateforme élévatrice 11 ainsi constituée présente l'avantage de s'inscrire dans la surface de la plateforme de chargement.

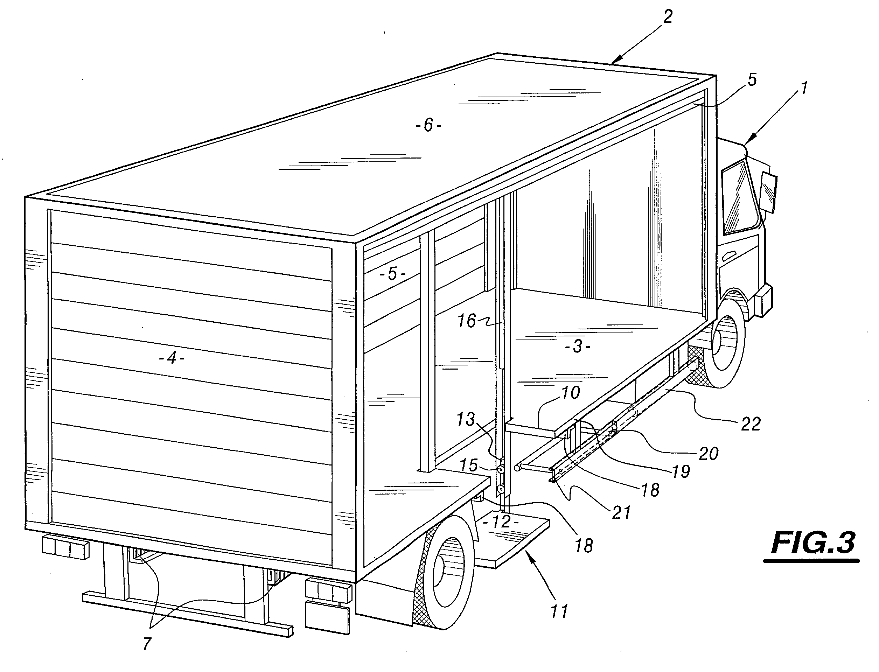

Par conséquent, lors d'opérations de manutention de marchandises en vue du chargement ou du déchargement de la caisse du véhicule, la plateforme 11 se déplace jusqu'au sol sans dépasser de la surface de la plateforme de chargement 3 et occupe alors la position représentée à la figure 3 qui permet un chargement et un déchargement aisés des marchandises.

Afin d'effectuer ces opérations, le véhicule équipé de la plateforme suivant l'invention peut stationner notamment en double file à une faible distance des véhicules qu'il côtoie.

Ainsi, son encombrement en largeur se trouve considérablement réduit par rapport aux véhicules équipés de plateformes élévatrices débordantes latéralement par rapport à leur plateforme de transport.

Les montants 14 qui contiennent les vérins d'actionnement 16 du déplacement en hauteur de la plateforme élévatrice 11, sont disposés à l'intérieur de la caisse 2 à une distance suffisante pour que la porte escamotable 5 correspondante puisse se loger sous la partie du toit 6 située devant les montants 14.

La plateforme élévatrice 11 lorsqu'elle se trouve dans une position affleurant la surface de la plateforme de transport 3, peut être utilisée pour recevoir par exemple une partie du chargement destinée au premier client de la tournée de l'utilisateur.

Lorsqu'on souhaite utiliser la plateforme élévatrice 11, on commence par dégager la porte latérale 5 correspondante, puis on commande le vérin 22 d'escamotage de la partie 21 de la barre d'encastrement 20 située en regard de la course de la plateforme 11.

Ensuite, après avoir chargé des marchandises sur la plateforme 11 ou bien si la plateforme 11 porte déjà des marchandises, on actionne les vérins 16 dans le sens de la descente de la plateforme 11 vers le sol.

En fin de course de descente, la plateforme 11 occupe la position représentée à la figure 3 dans laquelle l'utilisateur peut aisément décharger les marchandises qu'elle porte, ainsi qu'en trait mixte à la figure 2.

Ensuite, les vérins 16 sont commandés pour faire remonter la plateforme 11 soit dans sa position horizontale affleurant la surface de la plateforme de chargement 3, soit éventuellement dans une position plus élevée à l'intérieur de la caisse 2 afin de permettre de décharger des marchandises qui se trouvent empilées à un niveau supérieur à celui de la plateforme de transport 3.

Lors d'un tel déplacement de la plateforme élévatrice 11 au-dessus de la surface de la plateforme de chargement 3, sa valeur est limitée par la course des vérins 16 qui dans le présent exemple, occupent la partie supérieure des montants 14 supportant la plateforme élévatrice 11.

Bien entendu, les opérations de chargement se font en sens inverse, la plateforme 11 étant tout d'abord abaissée jusqu'au sol et les marchandises étant chargées sur celle-ci pour être ensuite montées sous l'action des vérins 16 à la hauteur souhaitée pour leur mise en place dans la caisse 3 du véhicule.

Dans le présent exemple, le véhicule comporte une plateforme élévatrice 11 suivant l'invention disposée en regard d'une porte latérale 5.

Il est bien entendu possible de prévoir une plateforme élévatrice de ce type en regard de chaque porte latérale 5.

Il est également possible de prévoir une plateforme élévatrice à la partie arrière du véhicule située derrière les roues arrière 8.

De telles possibilités sont représentées en trait mixte sur le schéma de la figure 4 sur laquelle on voit en trait plein l'emplacement réel de la plateforme élévatrice 11 et en trait mixte, un emplacement possible pour une plateforme le long de la rive de la plateforme de transport 3 opposée à la position occupée par la plateforme élévatrice 11 qui vient d'être décrite et deux emplacements possibles pour des plateformes situées à l'arrière des roues arrière 8 du véhicule, ces emplacements étant désignés par des numéros de références respectifs 11a, 11b et 11c.

En variante non représentée pour un véhicule comportant une caisse à porte latérale relevante, comme la porte 5 de la caisse 2, la plateforme de transport 3 comporte des faux-longerons qui s'étendent en appui sur les longerons 7 du châssis du véhicule, en étant bridés sur ceux-ci. La caisse 2 est supportée au moins en partie par ces faux-longerons qui s'étendent suivant la longueur de la caisse, en y étant solidarisés. Les faces latérales extérieures des faux-longerons sont en affleurement avec les faces latérales correspondantes des longerons 7. Les montants verticaux 14 sont soudés sur la face latérale extérieure d'un des faux-longerons de façon à s'étendre suivant une partie de leur longueur au contact des faces latérales extérieures des longerons 7 sans y être solidarisés, à la différence de l'agencement de la figure 2 pour lequel les montants 14 sont distants des longerons 7. Les longerons s'opposent ainsi plus efficacement au basculement vers l'intérieur des parties inférieures des montants 14. De même, les parties supérieures des montants 14 qui s'étendent sensiblement jusqu'au toit de la caisse 2 sont laissées au moins partiellement libres en partie supérieure de façon à ce que, au niveau dedites extrémités supérieures de ces montants, des raccords de connexion hydraulique entre les vérins 16 et une source hydraulique appropriée soient facilement accessibles.

Dans le présent exemple qui vient d'être décrit, le véhicule comporte une caisse 2 portée par la plateforme de transport 3.

On peut cependant envisager d'équiper d'une plateforme élévatrice suivant l'invention, un véhicule pourvu d'une plateforme de transport nue. Dans ce cas, les montants 14 sont fixés seulement au châssis du véhicule et leurs extrémités supérieures peuvent être reliées entre elles par une entretoise.

Il est également possible d'équiper d'une plateforme élévatrice suivant l'invention un véhicule pourvu d'un fourgon fermé et muni d'une porte latérale classique.

## Revendications

1. Véhicule de transport de marchandises comprenant une plateforme de transport (3) supportant une caisse (2) et portée par les longerons (7) du châssis du véhicule situés à l'arrière de la cabine du conducteur (1) de celui-ci, et une plateforme élévatrice (11) mobile verticalement pour le chargement et le déchargement du véhicule, **caractérisé en ce que** ladite plateforme élévatrice (11) est disposée dans une échancrure (10) de la plateforme de transport (3) débouchant sur un bord de ladite plateforme coopérant avec une porte (5) de la caisse (2) et est montée déplaçable le long de montants verticaux (14) solidaires du châssis du véhicule, au moins entre une position affleurant la plateforme de transport (3) et une position au sol, lesquels montants verticaux (14) s'étendent à partir du dessous de la plateforme de transport (3) jusqu'au toit (6) de la caisse (2), **en ce que** ladite porte (5) est une porte coulissante, et **en ce que** lesdits montants verticaux (14) sont disposés dans la caisse (2) à l'intérieur par rapport à la position de la porte coulissante (5) correspondante lorsqu'elle est escamotée sous le toit (6) de la caisse (2).

2. Véhicule de transport de marchandises suivant la revendication 1, **caractérisé en ce que** la plateforme élévatrice (11) comporte un plateau (12) pourvu de bras verticaux (13) engagés dans les montants verticaux (14) correspondant et déplaçables dans ceux-ci au moyen d'organes de mouvement (15) sous l'action de vérins (16) portés par lesdits montants verticaux (14).

3. Véhicule de transport de marchandises suivant la revendication 2, **caractérisé en ce que** les vérins (16) d'actionnement de la plateforme élévatrice (11) sont disposés dans les portions supérieures des montants verticaux (14).

4. Véhicule de transport de marchandises suivant l'une des revendications précédentes, muni de barres anti-encastrement (20), **caractérisé en ce qu'**une partie (21) de la barre anti-encastrement (20) située en regard de la trajectoire de la plateforme élévatrice (11) est montée escamotable parallèlement à la direction de la barre anti-encastrement (20).

5. Véhicule de transport de marchandises suivant l'une des revendications 1 à 3, muni de barres anti-encastrement, **caractérisé en ce qu'**une partie de la barre anti-encastrement située en regard de la trajectoire de la plateforme élévatrice est montée déplaçable transversalement vers le châssis du véhicule sous l'action d'un vérin.

6. Véhicule de transport de marchandises suivant l'une quelconques des revendications précédentes, **caractérisé en ce que** les montants verticaux (14) s'étendent en partie au contact des longerons (7) du châssis du véhicule.
